# EUROPEAN PATENT SPECIFICATION

(11) **EP 2 856 545 B1**
(45) Date of publication and mention of the grant of the patent: **08.08.2018**
(21) Application number: 13730046.3
(22) Date of filing: 20.05.2013
(51) Int. Cl.: H01M 8/02, H01M 8/24, H01M 8/10

(54) **FUEL CELL ASSEMBLIES AND CORRESPONDING METHODS OF ASSEMBLING**
BRENNSTOFFZELL-EINHEITEN UND ENTSPRECHENDE VERFAHREN ZUM ZUSAMMENSETZEN
ASSEMBLAGES DE PILE À COMBUSTIBLE ET PROCÉDÉS D'ASSEMBLAGE CORRESPONDANTS

(30) Priority: 28.05.2012 GB 201209362
(43) Date of publication of application: 08.04.2015
(73) Proprietor: Intelligent Energy Limited, Loughborough LE11 3GB (GB)
(72) Inventor: HOOD, Peter David, Loughborough LE11 3GB (GB)
(74) Representative: Ahmad, Sheikh Shakeel
(86) International application number: PCT/GB2013/051309
(87) International publication number: WO 2013/178987

(56) References cited:
- GB-A- 2 478 154
- US-A1- 2004 241 525
- US-A1- 2006 073 385
- US-A1- 2007 042 254
- US-A1- 2008 145 712
- US-A1- 2011 281 195

## Description

The present disclosure relates to the field of fuel cell plate assemblies and methods of assembling fuel cell plate assemblies, and in particular, although not exclusively, to fuel cell plate assemblies that can be put together to form a fuel cell stack and methods of assembling a fuel cell stack.

Conventional electrochemical fuel cells convert fuel and oxidant, generally both in the form of gaseous streams, into electrical energy and a reaction product. A common type of electrochemical fuel cell for reacting hydrogen and oxygen comprises a polymeric ion (proton) transfer membrane, with fuel and air being passed over respective sides of the membrane. Protons (i.e. hydrogen ions) are conducted through the membrane, balanced by electrons conducted through a circuit connecting the anode and cathode of the fuel cell. To increase the available voltage, a stack may be formed comprising a number of such membranes arranged with separate anode and cathode fluid flow paths. Such a stack is typically in the form of a block comprising numerous individual fuel cell plates held together by end plates at either end of the stack.

Because the reaction of fuel and oxidant generates heat as well as electrical power, a fuel cell stack requires cooling once an operating temperature has been reached. Cooling may be achieved by forcing air through the cathode fluid flow paths. In an open cathode stack, the oxidant flow path and the coolant path are the same, i.e. forcing air through the stack both supplies oxidant to the cathodes and cools the stack.

US 2007/0042254 discloses an integrated seal for a fuel cell assembly and fuel cell stack. US 2004/0241525 A1 discloses processes and apparatuses for automated fabrication of multiple layer fuel cell assemblies and sub-assemblies in roll-good form. US 2006/073385 A1 discloses multipurpose sealing adhesive materials for sealing different components of an electrochemical cell. US 2006/073385 A1 describes sealing polymers that are capable of adhering to plain and textured metal, graphite and graphite-filled polymer composite separator plates.

According to a first aspect of the invention, there is provided a method of assembling a fuel cell plate assembly, the method comprising:
placing a bipolar plate on a build point platform;
optionally lowering the build point platform;
placing a prefabricated first fluid diffusion layer on, and in alignment with, the bipolar plate;
optionally lowering the build point platform;
dispensing a first track of adhesive adjacent both the bipolar plate and a peripheral edge of the first fluid diffusion layer;
placing a prefabricated MEA and second fluid diffusion layer in sealing engagement with the first track of adhesive and thereby forming a seal between the
   bipolar plate, the peripheral edge of the first fluid diffusion layer and the MEA and second fluid diffusion layer; and
optionally lowering the build point platform;
wherein the method comprises lowering the build point platform before and/or after any or all of the placing or dispensing steps.

Such a method enables convenient and efficient assembly at a single build point, and does not require a significant amount of human intervention. Also, it is advantageous to provide a consistent assembly plateau by lowering the build point platform between component placement operations.

The method may be automated.

The method may further comprise placing the prefabricated MEA and the second fluid diffusion layer onto, and in sealing engagement with, the first track of adhesive such that a face of the prefabricated MEA and second fluid diffusion layer is in sealing engagement with the first track of adhesive.

Dispensing an adhesive may comprise screen printing the adhesive and/or placing a semi-fluid adhesive in a desired location using transfer tape.

There may be provided a method of assembling a fuel cell stack, the method comprising:
placing a first end plate on a build point platform;
lowering the build point platform;
repeatedly performing any method of assembling a fuel cell plate assembly, and lowering the build point platform in order to assemble a plurality of fuel cell plate assemblies on the first end plate;
placing a second end plate on the plurality of fuel cell plate assemblies.

The method may further comprise compressing the first end plate, plurality of fuel cell plate assemblies and second end plate. Advantageously, this compressing can be performed at the build point on the build point platform.

The method may further comprise securing the first end plate, plurality of fuel cell plate assemblies and second end plate in the compressed state. Advantageously, this securing can be performed at the build point on the build point platform.

The bipolar plates may have a first and/or a second port. The method of assembling a fuel cell plate assembly may further comprise:
dispensing a second track of adhesive as a loop around the first port of the bipolar plate; and/or
dispensing a third track of adhesive as a loop around the second port of the bipolar plate.

The second and third tracks of adhesive may provide seals between respective ports of adjacent bipolar plates in the fuel cell stack. In this way, a fluid communication gallery can be provided through the thickness of the fuel cell stack in order to provide fluid to each of the fuel cell plate assemblies.

The method may further comprise exposing the one or more tracks of adhesive to ultra-violet light to cure the adhesive. It can be advantageous to cure the adhesive after the fuel cell stack has been assembled so as not to take up valuable time at the build point. This can improve the time of manufacture per fuel cell stack and provide an increase throughput for the method of assembly.

A description is now given, by way of example only, with reference to the accompanying drawings, in which:
Figures 1 to 4 show schematically how a fuel cell plate assembly according to an embodiment of the invention can be built up;
Figure 5 shows a section view of a second bipolar plate positioned on top of the fuel cell plate assembly of Figure 4;
Figures 6 to 12 illustrate schematically how a fuel cell plate assembly can be constructed according to an embodiment of the invention;
Figure 13 illustrates schematically how a fuel cell stack can be put together according to an embodiment of the invention;
Figure 14 illustrates schematically how a fuel cell stack can be put together according to an alternative embodiment of the invention;
Figure 15 illustrates a fuel cell stack according to an embodiment of the invention; and
Figure 16 illustrates a method according to an embodiment of the invention.

One or more embodiments disclosed herein relate to a method of assembling a fuel cell plate assembly and a fuel cell stack at a single build point on a build point platform. The method can be automated and can provide an efficient and convenient method for assembly that does not require significant, or any, human intervention. Advantageously the build point platform can be lowered after component placement operation in order to provide a consistent location.

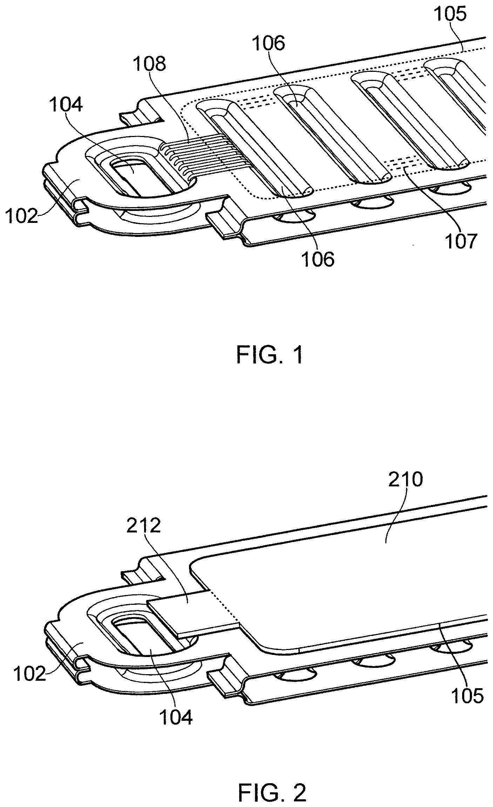

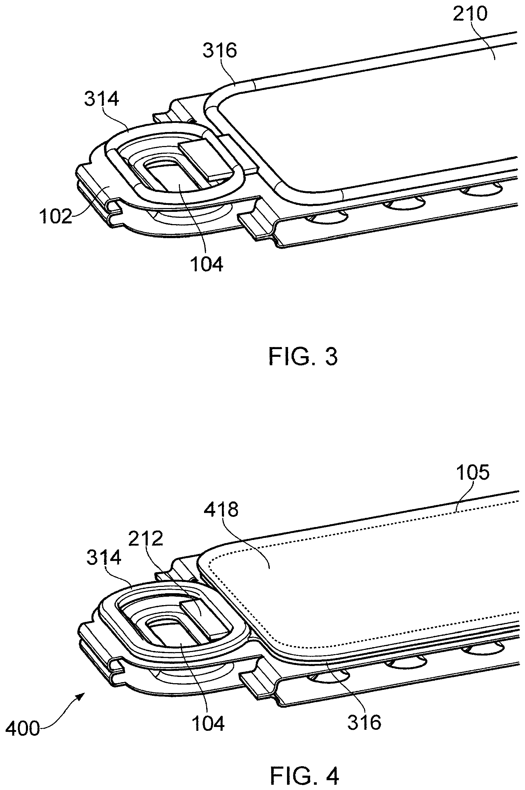

Figures 1 to 4 show how a fuel cell plate assembly according to an embodiment of the invention can be built up. Figure 1 shows a bipolar plate 102. Figure 2 shows a prefabricated first fluid diffusion layer 210 placed over the bipolar plate. Figure 3 shows adhesive 314, 316 dispensed over the bipolar plate 102 and prefabricated first fluid diffusion layer 210. Figure 4 shows a laminate layer 418, which includes a membrane electrode assembly and a second fluid diffusion layer, placed over the prefabricated first fluid diffusion layer and adhesive 316. Further details are provided below.

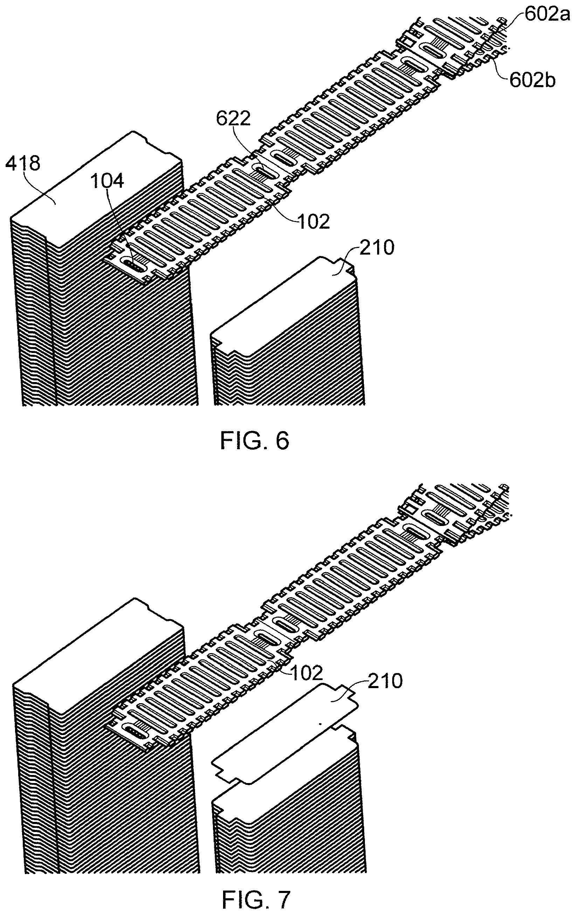

Figure 1 shows one end of a bipolar plate 102 that can provide part of a fuel cell plate assembly according to an embodiment of the invention. The end of the bipolar plate 102 that is shown in Figure 1 has a port 104. It will be appreciated that the other end of the bipolar plate 102 can also have a port, as shown in Figure 6. The port 104 is for receiving a fluid, such as hydrogen, that is to be provided to an active area of an electrode. The footprint of the active area of an electrode is shown with reference 105 in Figure 1, even though the electrode itself is not shown. The electrode is described in more detail below with reference to Figure 4.

The active area 105 can be considered as the footprint/area of the gas diffusion layers (GDLs) that are in contact with the electrode surfaces such that the electrodes are provided with the necessary reactant gasses to promote proton exchange through the membrane.

The port 104 receives the fluid in a direction that is through the thickness of the bipolar plate 102. In addition to providing the fluid to the electrode, the port 104 also passes the fluid to an adjacent fuel cell assembly in a fuel cell stack as the ports of the bipolar plates are aligned when the stack is constructed.

In this example, the bipolar plate 102 has a plurality of fluid flow channels 106, which are discontinuous and extend across a lateral width of the bipolar plate 102. In this way, the fluid can be laterally dispersed across the width of the active area 105 when the fluid enters the fluid flow channels 106.

As will be discussed in more detail below, the fluid passes along the longitudinal length of the bipolar plate 102 through a gas diffusion layer. However, one or more optional port channels 108 can provide a fluid connection between the port 104 and the active area 105. The port channels 108 can be provided as grooves in the bipolar plate 102. The relationship between the port channels 108 and the fluid diffusion layer will be described in more detail below with reference to Figure 2.

In addition, one or more optional connecting channels 107 can also transport the fluid between successive fluid flow channels 106 along the length of the bipolar plate 102. Such connecting channels 107 can also be provided as grooves in the bipolar plate 102.

The connecting channels 107 may alternate between connecting different ends of the fluid flow channels 106 so as to provide a winding or inter-digitized path along the longitudinal length of the bipolar plate 102. This can encourage the fluid to penetrate a large proportion of the fluid diffusion layer so that it is presented evenly to the electrode.

Figure 2 shows a prefabricated first fluid diffusion layer 210 located on the bipolar plate 102 of Figure 1. The fluid diffusion layer is typically known as a gas diffusion layer (GDL), and in this example will be referred to as an anode GDL 210 as it provides gas to the active area of the anode side of the electrode.

The anode GDL 210 has an extending region 212 that extends between the port 104 of the bipolar plate 102 and the active area 105. The tab 212 is outside the footprint of the active area 105. The extending region will be referred to as a tab 212. The tab 212 extends from the main body of the anode GDL 210, which in this example is generally co-located with the active area 105. The tab 212 of the anode GDL can communicate the hydrogen received at the port 104 to the active area 105. As identified above, the port channels 108 shown in Figure 1 can also communicate the hydrogen from the port 104 to the active area 105. However, it will be appreciated that these port channels 108 are optional as the transport of hydrogen can take place solely through the anode GDL 210. Similarly, the connecting channels 107 of Figure 1 are also optional as the anode GDL 210 can be the sole means for communicating the hydrogen between the fluid flow channels 106.

In other embodiments, the tab 212 can be considered as optional because the port channels 108 can be used to communicate fluid between the port 104 and the active area 105.

Figure 3 shows two tracks of adhesive 314, 316 deposited on the bipolar plate 102 and anode GDL 210 of Figure 2. A second track of adhesive 314 provides a continuous loop around the port 104 and passes over the tab 212 of the anode GDL 210. A first track of adhesive 316 is deposited on the bipolar plate 102 around the outside of the anode GDL 210, which also passes over the tab 212 of the anode GDL 210. In this way, the first track of adhesive 316 is positioned so that it provides a seal around the anode GDL 210 when the membrane electrode assembly is located on the partial fuel cell plate assembly. The first track of adhesive 316 is located adjacent both the bipolar plate 102 and a peripheral edge of the anode GDL 210.

The adhesive is selected such that penetration of the adhesive into the tab 212 of the anode GDL 210 is minimal, thereby not significantly impeding fluid transport through the anode GDL 210.

Figure 4 shows a fuel cell plate assembly 400 in which a laminate layer 418 has been added to the partial fuel cell plate assembly of Figure 3. The laminate layer is a 4-layer membrane electrode assembly (MEA) and comprises a cathode fluid diffusion layer, a first layer of catalyst, an electrode membrane and a second layer of catalyst. The two catalyst layers and the electrode membrane can be referred to together as a membrane electrode assembly comprising the electrode, or alternatively a prefabricated MEA and second fluid diffusion layer.

The 4-layer MEA 418 is positioned over the first track of adhesive 316. It can be seen from Figure 4 that the first track of adhesive 316 has been displaced and spread out such that it abuts the second track of adhesive 314 thereby providing a seal around the tab 212 of the anode GDL 210 that is outside the port 104. Also, the two displaced adhesive tracks 314, 316 meet over the surface of the tab 212 thereby completing the anode enclosure and providing a global anode seal for the cell.

In this way the prefabricated MEA and second fluid diffusion layer 418 is placed in sealing engagement with the dispensed adhesive 316 and thereby forms a seal between the bipolar plate102, the peripheral edge of the first fluid diffusion layer 210 and the MEA and second fluid diffusion layer 418. In some examples, a bottom face of the prefabricated MEA and second fluid diffusion layer 418 can be in sealing engagement with the dispensed adhesive 316.

The active area is defined within the periphery of the 4-layer MEA 418 as an outer band of the 4-layer MEA 418 is positioned over the adhesive 316, which prevents the transport of the anode gas (hydrogen) to the electrode. It will be appreciated that the placement of the adhesive can be controlled so as to minimise the displacement of the adhesive into the intended active area 105.

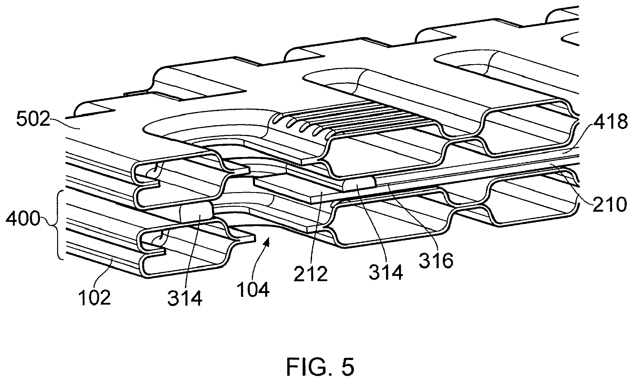

Figure 5 shows a section view of a second bipolar plate 502 positioned on top of the fuel cell plate assembly 400 of Figure 4. As is known in the art, a plurality of fuel cell plate assemblies 400 can be built up to form a fuel cell stack.

As shown in Figure 5, when the second bipolar plate 502 is positioned on top of the fuel cell assembly 400 it contacts the second track of adhesive 314 around the port 104 of the first bipolar plate 102. This second track of adhesive 314 therefore creates a seal around the ports of the two bipolar plates, underneath which the tab 212 of the anode GDL 210 passes. If the bipolar plate 102 includes port channels (as shown in Figure 1 with reference 108), then the tab 212 of the anode GDL 210 can be rigid enough to prevent slumping into the grooves of the port channels. This can be in contrast to prior art fuel cells, whereby a sub-gasket associated with the electrode is located above the grooves, and can sag into the grooves.

Figures 6 to 12 illustrate schematically how a fuel cell plate assembly can be constructed on a build point platform (not shown in the figures) according to an embodiment of the invention. The build point platform can be lowered after components are added to the fuel cell plate assembly so that the build point is at substantially the same height during the construction process.

Figure 6 illustrates a strip of bipolar plates 102 that are provided to the build point. It can be seen that the bipolar plates 102 in this example have two ports 104, 622. The first port 104 is an inlet as discussed in detail above. The second port 622 can be an outlet or an inlet. In some embodiments, the stoichiometric efficiency of the reaction with the hydrogen in the fuel cell is greater than one, and therefore the second port 622 should be used as an outlet in order to provide a through flow for product water management. In other embodiments, the second port 622 can also be an inlet if the stoichiometric efficiency and/or water management techniques permit.

The bipolar plates may comprise a separate anode sheet 602a and a cathode sheet 602b that are only joined together, for example resistance, laser or adhesive bonded together shortly before the bipolar plate 102 enters the build point. This is shown in Figure 6 as the anode sheets 602a and cathode sheets 602b are initially supplied separately.

Located on either side of the build point are a stack of anode GDLs 210 and a stack of 4-layer MEAs 418.

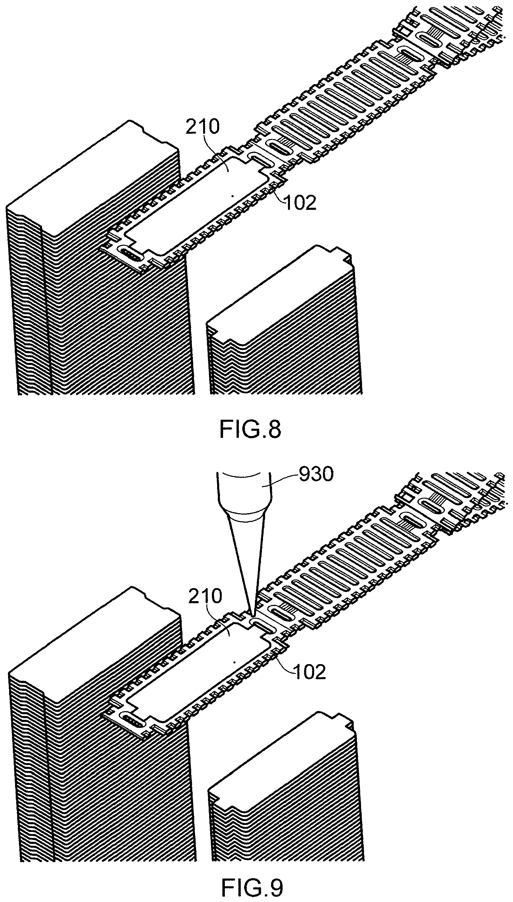

Figure 7 shows that a prefabricated first fluid diffusion layer, which will be referred to as an anode GDL 210, has been taken from the stack ready for positioning on the bipolar plate in the same way as shown in Figure 2. It will be appreciated that this operation, and the operations that follow, can be automated. Figure 8 shows the anode GDL 210 located in position on, and in alignment with, the bipolar plate 102.

Figure 9 shows an adhesive dispenser 930 in position above the anode GDL 210 and bipolar plate 102.

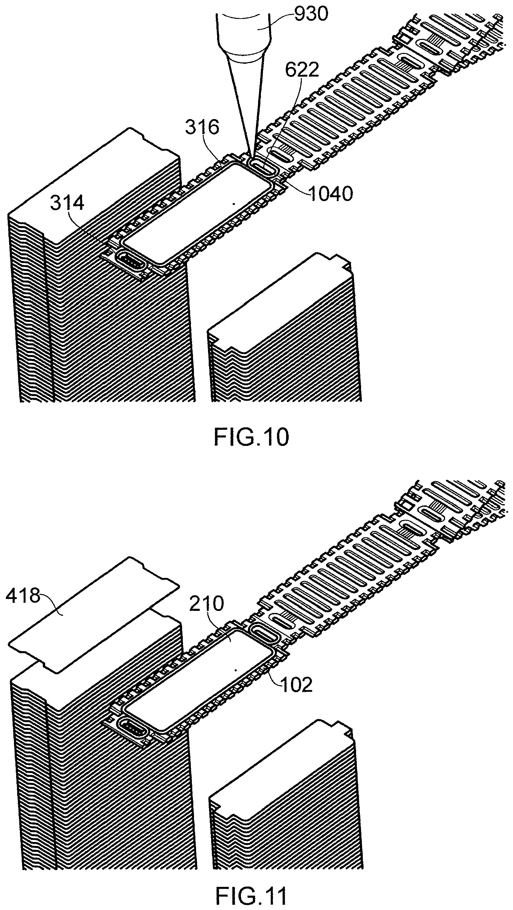

Figure 10 shows three tracks of adhesive 314, 316, 1040 that have been dispensed by the adhesive dispenser 930. The first track 316 is dispensed to a location that is adjacent both the bipolar plate and a peripheral edge of the anode GDL. The second track 314 provides a continuous loop around the first port 104. The first track 316 and second track 314 are the same as those described with reference to Figure 3. Also shown in Figure 10 is a third track of adhesive 1040 that provides a continuous loop around the second port 622. This is in the same way that the second track of adhesive 314 provides a continuous loop around the first port 104.

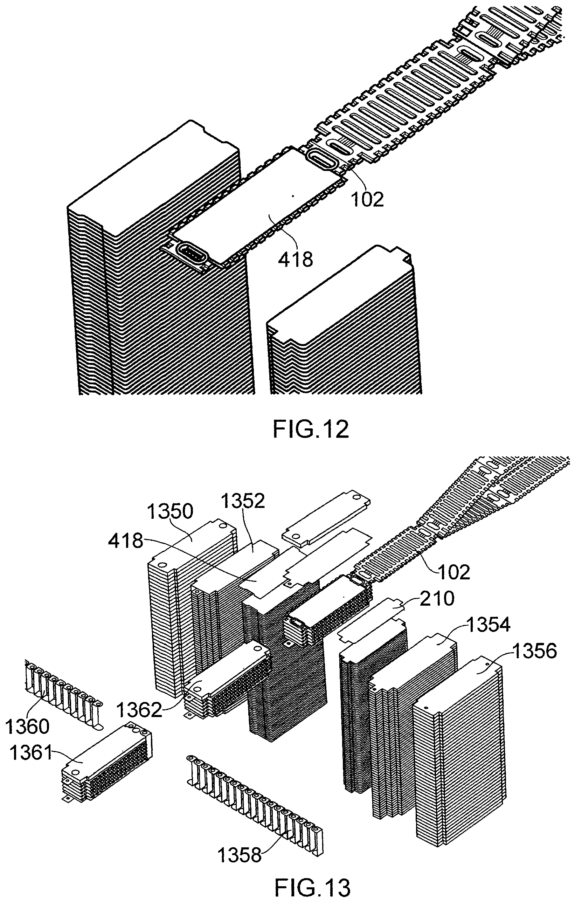

Figure 11 shows that a prefabricated 4-layer MEA and second diffusion layer 418 has been taken from the stack ready for positioning on the bipolar plate 102 and anode GDL 210 in the same way as shown in Figure 4. Figure 12 shows the 4-layer MEA and second diffusion layer 418 located in position on the bipolar plate 102 and anode GDL 210.

It will be appreciated that each of the construction steps illustrated by Figures 6 to 12 can be performed on the same build point platform as it is lowered in between placement operations.

Figure 13 develops the method of construction illustrated by Figure 6 to 12 such that a fuel cell stack can be put together on a build point platform (not shown). Figure 13 illustrates a strip of bipolar plates 102, a stack of anode GDLs 210 and a stack of 4-layer MEAs 418 that are the same as those illustrated in Figures 6 to 12. In addition, Figure 13 shows two stacks of components 1350, 1352 for a top/second end plate of the fuel cell stack and two stacks of components 1354, 1356 for a bottom/first end plate of the fuel cell stack. Plates from the stacks 1354, 1356 for the bottom end plate are placed on the build point platform before the construction of the fuel cell plate assemblies is begun. Plates from the stacks 1350, 1352 for the top end plate are placed on top of the fuel cell plate assemblies at the build point when the fuel cell stack has been built to the desired size. The fuel cell stack can then be moved from the build point platform to a position shown with reference 1362 in Figure 13.

The first end plate 1354, 1356, the plurality of fuel cell plate assemblies and the second end plate 1350, 1352 can be compressed at the build point or elsewhere in order to compress the components to a working dimension. Alternatively, the components may be compressed to a dimension that is slightly smaller than the working dimension so that clips 1358, 1360 can conveniently be attached to the plates to secure the fuel cell assembly together.

Clips 1358, 1360 can be attached to each side of the fuel cell stack 1362 to keep the fuel cell plate assemblies together at the intended working dimension in order to provide a completed fuel cell stack 1361. The clips 1358, 1360 can be attached to the fuel cell stack 1362 before or after it is moved from its original build point.

In some examples, the dispensed adhesive can be exposed to a curing environment either during or after the fuel cell stack is assembled. A suitable curing environment may be provided by exposing the fuel cell stack to ultraviolet light and/or a suitable curing temperature. The structure of the fuel cell plates of this embodiment can be well suited to exposure to ultraviolet light as a least a portion of each track of adhesive can be exposed from between the stacked fuel cell plate assemblies.

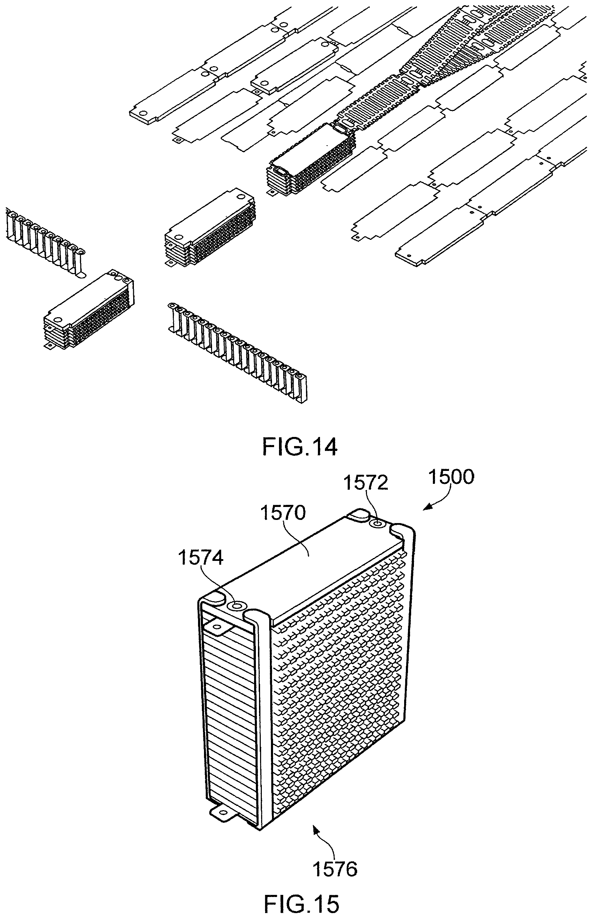

Figure 14 illustrates an alternative method for constructing a fuel cell stack according to an embodiment of the invention. In this example, the anode GDL, 4-layer MEAs and components for the end plates are strip supplied and segmented just before a pick and place process.

Figure 15 illustrates a fuel cell stack 1500 according to an embodiment of the invention. The top end plate 1570 of the fuel cell stack includes two apertures 1572, 1574 that are respectively in fluid connection with the ports (not shown in Figure 15) at each end of the fuel cell plate assemblies. It will be appreciated that similar apertures may be provided in the bottom end plate 1576 if required.

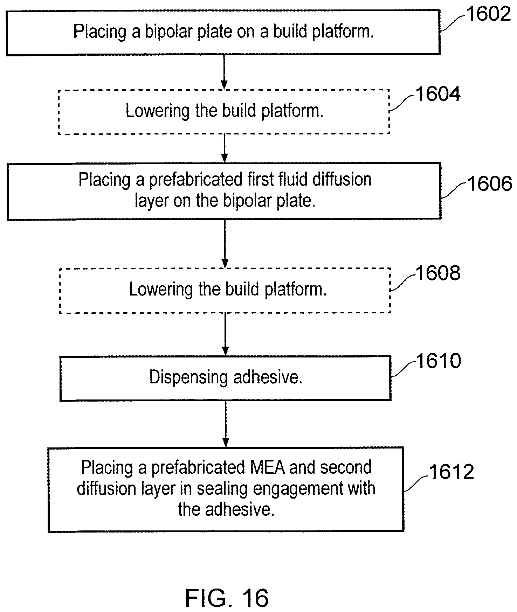

Figure 16 illustrates a method of assembling a fuel cell plate assembly according to an embodiment of the invention.

The method begins at step 1602 by placing a bipolar plate on a build point platform. The build platform can then be lowered at step 1604 in some embodiments, for example such that the top of the bipolar plate is at the same height as the original height of the build platform. That is, the build platform may be lowered by a distance equal to the thickness of the bipolar plate.

At step 1606, the method of assembly continues by placing a prefabricated first fluid diffusion layer on, and in alignment with, the bipolar plate. The build platform can then be lowered at step 1608, for example such that the top of the prefabricated first fluid diffusion layer is at the same height as the original height of the build platform. That is, the build platform may be lowered by a distance equal to the thickness of the prefabricated first fluid diffusion layer.

At step 1610, the method continues by dispensing a first track of adhesive adjacent both the bipolar plate and a peripheral edge of the first fluid diffusion layer. In some examples, method step 1610 may also involve dispensing a second track of adhesive as a loop around a first port of the bipolar plate and/or dispensing a third track of adhesive as a loop around a second port of the bipolar plate.

The adhesive can be dispensed by screen printing a liquid adhesive or placing a semi-fluid adhesive in the desired location using transfer tape.

At step 1612, the method continues by placing a prefabricated MEA and second fluid diffusion layer in sealing engagement with the first track of adhesive. This can form a seal between the bipolar plate, the peripheral edge of the first fluid diffusion layer and the MEA and second fluid diffusion layer.

It will be appreciated that in some examples the build point platform can be, but need not necessarily be, lowered before or after any or all of the placing and dispensing steps 1602, 1606, 1610, 1612. The specific increment that the build point platform is lowered can be different for different lowering operations. The specific increment that the build point platform is lowered does not necessarily need to be related to every component placed.

The method of Figure 16 can be repeated in order to assemble a fuel cell stack. In such examples, the second and third tracks of adhesive can provide seals around the respective first and second ports of adjacent bipolar plates.

Any "prefabricated" layers disclosed herein may be considered as unitary, self-supporting, layers that can be provided to a build point as a single component.

## Claims

1. A method of assembling a fuel cell plate assembly (400), the method comprising:
placing (1602) a bipolar plate (102) on a build point platform;
placing (1606) a prefabricated first fluid diffusion layer (210) on, and in alignment with, the bipolar plate (102);
dispensing (1610) a first track of adhesive (316) adjacent both the bipolar plate (102) and a peripheral edge of the first fluid diffusion layer (210); and
placing (1612) a prefabricated MEA and second fluid diffusion layer (418) in sealing engagement with the first track of adhesive (316) and thereby forming a seal between the bipolar plate (102), the peripheral edge of the first fluid diffusion layer (210) and the MEA and second fluid diffusion layer;
wherein the method comprises lowering (1604,1608) the build point platform before or after any or all of the placing and dispensing steps.

2. The method of claim 1, comprising lowering (1604) the build point platform after placing the bipolar plate (102) on the build point platform.

3. The method of claim 1 or claim 2, comprising lowering (1608) the build point platform after placing the prefabricated first fluid diffusion layer (210) on, and in alignment with, the bipolar plate (102).

4. The method of any preceding claim, comprising lowering the build point platform after placing the prefabricated MEA and second fluid diffusion layer (418) in sealing engagement with the first track of adhesive (316).

5. The method of any preceding claim, wherein the method is automated.

6. The method of any preceding claim, comprising:
placing (1612) the prefabricated MEA and the second fluid diffusion layer (418) onto, and in sealing engagement with, the first track of adhesive (316) such that a face of the prefabricated MEA and second fluid diffusion layer (418) is in sealing engagement with the first track of adhesive.

7. The method of any preceding claim, wherein dispensing (1610) an adhesive comprises screen printing the adhesive.

8. The method of any one of claims 1 to 6, wherein dispensing (1610) an adhesive comprises placing a semi-fluid adhesive in a desired location using transfer tape.

9. A method of assembling a fuel cell stack, the method comprising:
placing a first end plate (1570) on a build point platform;
lowering the build point platform;
repeatedly performing the method of any one of claims 1 to 8 and lowering the build point platform in order to assemble a plurality of fuel cell plate assemblies (400) on the first end plate (1570);
placing a second end plate (1576) on the plurality of fuel cell plate assemblies (400).

10. The method of claim 9, further comprising:
compressing the first end plate (1570), plurality of fuel cell plate assemblies (400) and second end plate (1576); and
securing the first end plate (1570), plurality of fuel cell plate assemblies and second end plate (1576) in the compressed state.

11. The method of claim 9 or claim 10, wherein the bipolar plates (102) have a first and a second port (104,622), and the method of assembling a fuel cell plate assembly (400) further comprises:
dispensing a second track of adhesive (314) as a loop around the first port (104) of the bipolar plate (102); and
dispensing a third track of adhesive (1040) as a loop around the second port (622) of the bipolar plate (102);
such that the second and third tracks of adhesive (314, 1040) provide seals between respective ports (104,622) of adjacent bipolar plates (102) in the fuel cell stack.

12. The method of any preceding claim, further comprising exposing the one or more tracks of adhesive (316, 314, 1040) to ultra-violet light to cure the adhesive.

## Patentansprüche

1. Verfahren zum Zusammensetzen einer Brennstoffzellenplatten-Einheit (400), wobei das Verfahren Folgendes umfasst:
Platzieren (1602) einer Bipolarplatte (102) auf einer Baupunktplattform;
Platzieren (1606) einer vorgefertigten ersten Fluiddiffusionsschicht (210) auf und in Ausrichtung mit der Bipolarplatte (102);
Abgeben (1610) einer ersten Klebstoffspur (316) angrenzend an die Bipolarplatte (102) und an einen peripheren Rand der ersten Fluiddiffusionsschicht (210); und
Platzieren (1612) einer vorgefertigten MEA und einer zweiten Fluiddiffusionsschicht (418) in Dichtungseingriff mit der ersten Klebstoffspur (316) und dadurch Bilden einer Dichtung zwischen der Bipolarplatte (102), dem peripheren Rand der ersten Fluiddiffusionsschicht (210) und der MEA und der zweiten Fluiddiffusionsschicht;
wobei das Verfahren das Absenken (1604, 1608) der Baupunktplattform vor oder nach einem oder allen der Platzierungs- und Abgabeschritte umfasst.

2. Verfahren nach Anspruch 1, umfassend das Absenken (1604) der Baupunktplattform nach dem Platzieren der Bipolarplatte (102) auf der Baupunktplattform.

3. Verfahren nach Anspruch 1 oder Anspruch 2, umfassend das Absenken (1608) der Baupunktplattform nach dem Platzieren der vorgefertigten ersten Fluiddiffusionsschicht (210) auf und in Ausrichtung mit der Bipolarplatte (102).

4. Verfahren nach einem der vorhergehenden Ansprüche, umfassend das Absenken der Baupunktplattform nach dem Platzieren der vorgefertigten MEA und der zweiten Fluiddiffusionsschicht (418) in Dichtungseingriff mit der ersten Klebstoffspur (316).

5. Verfahren nach einem der vorhergehenden Ansprüche, wobei das Verfahren automatisiert ist.

6. Verfahren nach einem der vorhergehenden Ansprüche, umfassend:
Platzieren (1612) der vorgefertigten MEA und der zweiten Fluiddiffusionsschicht (418) auf und in Dichtungseingriff mit der ersten Klebstoffspur (316), derart, dass sich eine Fläche der vorgefertigten MEA und der zweiten Fluiddiffusionsschicht (418) in Dichtungseingriff mit der ersten Klebstoffspur befindet.

7. Verfahren nach einem der vorhergehenden Ansprüche, wobei das Abgeben (1610) eines Klebstoffs das Siebdrucken des Klebstoffs umfasst.

8. Verfahren nach einem der Ansprüche 1 bis 6, wobei das Abgeben (1610) eines Klebstoffs das Platzieren eines halbflüssigen Klebstoffs an einer gewünschten Stelle unter Verwendung eines Übertragungsbands umfasst.

9. Verfahren zum Zusammensetzen eines Brennstoffzellenstapels, wobei das Verfahren Folgendes umfasst:
Platzieren einer ersten Endplatte (1570) auf einer Baupunktplattform;
Absenken der Baupunktplattform;
wiederholtes Durchführen des Verfahrens nach einem der Ansprüche 1 bis 8 und Absenken der Baupunktplattform, um eine Vielzahl von Brennstoffzellenplatten-Einheiten (400) auf der ersten Endplatte (1570) zusammenzusetzen;
Platzieren einer zweiten Endplatte (1576) auf der Vielzahl von Brennstoffzellenplatten-Einheiten (400).

10. Verfahren nach Anspruch 9, ferner umfassend:
Komprimieren der ersten Endplatte (1570), einer Vielzahl von Brennstoffzellenplatten-Einheiten (400) und der zweiten Endplatte (1576); und
Sichern der ersten Endplatte (1570), einer Vielzahl von Brennstoffzellenplatten-Einheiten und der zweiten Endplatte (1576) in dem komprimierten Zustand.

11. Verfahren nach Anspruch 9 oder Anspruch 10, wobei die Bipolarplatten (102) eine erste und eine zweite Öffnung (104, 622) aufweisen und das Verfahren zum Zusammensetzen einer Brennstoffzellenplatten-Einheit (400) ferner Folgendes umfasst:
Abgeben einer zweiten Klebstoffspur (314) als eine Schleife rund um die erste Öffnung (104) der Bipolarplatte (102); und
Abgeben einer dritten Klebstoffspur (1040) als eine Schleife rund um die zweite Öffnung (622) der Bipolarplatte (102);
derart, dass die zweite und dritte Klebstoffspur (314, 1040) Dichtungen zwischen entsprechenden Öffnungen (104, 622) von angrenzenden Bipolarplatten (102) in dem Brennstoffzellenstapel bereitstellen.

12. Verfahren nach einem der vorhergehenden Ansprüche, ferner umfassend das Aussetzen der einen oder mehreren Klebstoffspuren (316, 314, 1040) gegenüber ultraviolettem Licht, um den Klebstoff zu härten.

## Revendications

1. Procédé d'assemblage d'un ensemble de plaques de pile à combustible (400), le procédé comprenant :
le placement (1602) d'une plaque bipolaire (102) sur une plateforme de point de construction ;
le placement (1606) d'une première couche préfabriquée de diffusion de fluide (210) sur, et en alignement avec, la plaque bipolaire (102) ;
la distribution (1610) d'une première trace d'adhésif (316) adjacente à la fois à la plaque bipolaire (102) et à un bord périphérique de la première couche de diffusion de fluide (210) ; et
le placement (1612) d'un MEA préfabriqué et d'une seconde couche de diffusion de fluide (418) en contact d'étanchéité avec la première trace d'adhésif (316) et formant ainsi un joint d'étanchéité entre la plaque bipolaire (102), le bord périphérique de la première couche de diffusion de fluide (210) et le MEA et la seconde couche de diffusion de fluide ;
le procédé comprenant l'abaissement (1604, 1608) de la plateforme de point de construction avant ou après l'une quelconque ou la totalité des étapes de placement et de distribution.

2. Procédé selon la revendication 1, comprenant l'abaissement (1604) de la plateforme de point de construction après le placement de la plaque bipolaire (102) sur la plateforme de point de construction.

3. Procédé selon la revendication 1 ou la revendication 2, comprenant l'abaissement (1608) de la plateforme de point de construction après placement de la première couche préfabriquée de diffusion de fluide (210) sur, et en alignement avec, la plaque bipolaire (102).

4. Procédé selon l'une quelconque des revendications précédentes, comprenant l'abaissement de la plateforme de point de construction après placement du MEA préfabriqué et de la seconde couche de diffusion de fluide (418) en contact d'étanchéité avec la première trace d'adhésif (316).

5. Procédé selon l'une quelconque des revendications précédentes, le procédé étant automatisé.

6. Procédé selon l'une quelconque des revendications précédentes, comprenant :
le placement (1612) du MEA préfabriqué et de la seconde couche de diffusion de fluide (418) sur, et en contact d'étanchéité avec, la première trace d'adhésif (316) de sorte qu'une face du MEA préfabriqué et de la seconde couche de diffusion de fluide (418) soit en contact d'étanchéité avec la première trace d'adhésif.

7. Procédé selon l'une quelconque des revendications précédentes, dans lequel la distribution (1610) d'un adhésif comprend la sérigraphie de l'adhésif.

8. Procédé selon l'une quelconque des revendications 1 à 6, dans lequel la distribution (1610) d'un adhésif comprend le placement d'un adhésif semi-fluide dans un emplacement souhaité à l'aide d'un ruban à transfert.

9. Procédé d'assemblage d'un empilement de piles à combustible, le procédé comprenant :
le placement d'une première plaque d'extrémité (1570) sur une plateforme de point de construction ;
l'abaissement de la plateforme de point de construction ;
la réalisation répétée du procédé selon l'une quelconque des revendications 1 à 8 et l'abaissement de la plateforme de point de construction afin d'assembler une pluralité d'ensembles (400) de plaques de pile à combustible sur la première plaque d'extrémité (1570) ;
le placement d'une seconde plaque d'extrémité (1576) sur la pluralité d'ensembles (400). de plaques de pile à combustible

10. Procédé selon la revendication 9, comprenant en outre :
la compression de la première plaque d'extrémité (1570), de la pluralité d'ensembles de plaques de pile à combustible (400) et de la seconde plaque d'extrémité (1576) ; et
l'arrimage de la première plaque d'extrémité (1570), de la pluralité d'ensembles de plaques de pile à combustible et de la seconde plaque d'extrémité (1576) à l'état comprimé.

11. Procédé selon la revendication 9 ou la revendication 10, dans lequel les plaques bipolaires (102) ont un premier et un second orifice (104, 622), et où le procédé d'assemblage d'un ensemble de plaques de pile à combustible (400) comprend en outre :
la distribution d'une deuxième trace d'adhésif (314) sous forme de boucle autour du premier orifice (104) de la plaque bipolaire (102) ; et
la distribution d'une troisième trace d'adhésif (1040) sous forme de boucle autour du second orifice (622) de la plaque bipolaire (102) ;
de sorte que les deuxième et troisième traces d'adhésif (314, 1040) produisent des joints d'étanchéité entre des orifices (104, 622) respectifs de plaques bipolaires (102) adjacentes dans l'empilement de piles à combustible.

12. Procédé selon l'une quelconque des revendications précédentes, comprenant en outre l'exposition des une ou plusieurs traces d'adhésif (316, 314, 1040) à une lumière ultraviolette pour durcir l'adhésif.
